# EUROPEAN PATENT SPECIFICATION

(11) **EP 4 328 750 B1**
(45) Date of publication and mention of the grant of the patent: **11.11.2026**
(21) Application number: 23203903.2
(22) Date of filing: 27.02.2019
(51) Int. Cl.: G06F 9/50

(54) **SYSTEM AND METHOD FOR SECURE DISTRIBUTED PROCESSING ACROSS NETWORKS OF HETEROGENEOUS PROCESSING NODES**
SYSTEM UND VERFAHREN ZUR SICHEREN VERTEILTEN NETZWERKÜBERGREIFENDEN VERARBEITUNG VON HETEROGENEN VERARBEITUNGSKNOTEN
SYSTEME ET PROCEDE DE TRAITEMENT DISTRIBUÉ SÉCURISÉ SUR LES RÉSEAUX DE NOEUDS DE TRAITEMENT HÉTÉROGÈNE

(30) Priority: 01.03.2018 US 201862637267 P
(43) Date of publication of application: 28.02.2024
(62) Document number(s) of the earlier application(s) in accordance with Art. 76 EPC: 19711473.9 / 3 759 600
(73) Proprietor: Conera Sistemas de Processamento Computacional Distribuido LTDA, 05471-000 São Paulo (BR)
(72) Inventor: SPINA, Guilherme, 05455-002 Sao Paulo (BR); DE MOURA ROCHA LIMA, Leonardo, 05455-002 Sao Paulo (BR)
(74) Representative: Clarke, Modet y Cía., S.L.

(56) References cited:
- US-A1- 2002 128 001
- US-A1- 2011 276 977
- US-A1- 2017 279 734

## Description

### CROSS-REFERENCE TO RELATED APPLICATION

This application claims the benefit of U.S. Provisional Application Serial No. 62/637,267 filed March 1, 2018.

### TECHNICAL FIELD

This disclosure relates generally to distributed computing and the Internet of Things (IoT). More specifically, this disclosure relates to systems and methods for secure distributed processing across networks of heterogeneous processing nodes.

### BACKGROUND

The proliferation of processor implemented control of non-computing devices, in both the public context (*e.g.,* streetlights, traffic signals, electrical meters) and the home (*e.g.,* internet connected lights, home automation systems, media streaming platforms), sometimes referred to as the "Internet of Things" (IoT) presents, at a minimum, a vast, largely untapped opportunity for the collection and processing of data at previously unimaginable scale and levels of granularity. For example, the controllers used in certain IoT home automation systems may, during the course of their intended operation, spend the bulk of their time monitoring and collecting temperatures inside and outside of a house. While monitoring and recording temperature data is typically not computationally expensive, as such, does not require a powerful processor, an IoT controller may, nonetheless possess substantial processing and memory resources to support occasional, computationally demanding operations, such as voice recognition.

A modern home may have multiple devices having similar sensor technology and processing capabilities as the home automation controller described above. Taken together, these devices can potentially be used to collect a wealth of highly granular data as to their environment (for example, block by block temperature data), as well as unused processing capacity to analyze and process such data. Beyond the possibilities for data science and mining data on massive scales, the ability to orchestrate and collectivize the processing power of a cloud or "fog" of small, networked processors presents new opportunities to extend the useful life of legacy devices, such as older personal computers, tablets, and phones, whose processing and data collection resources, while perhaps no longer suitable to support applications on subsequent generations of the same devices, could still be usefully applied as part of a larger processing network. Further applications of secure distributed processing across networks of heterogeneous processing nodes include, without limitation, providing CPU power to support proof-of-work based systems for verifying transactions recorded in a distributed ledger.

Realizing this wealth of unused computational power and sensor data presents significant technical challenges, including without limitation, orchestration issues (e.g., breaking up a processing task among numerous small processors) and security issues, such as protecting users' privacy and guarding against misuse of devices' sensors and processing capabilities, such as by surreptitiously recording conversations inside a house, or coopting a device's processing resources and network connection (e.g., turning the device into a "spambot.")

Embodiments as disclosed and claimed herein address these technical challenges by providing systems and methods for secure distributed processing across networks of heterogeneous processing nodes.

Document US2011276977 A1 relates to a workflow scheduler that distributes workflow tasks over computing resources based on factors such as computation cost, communication cost, and resource availability, including concurrent execution and failure handling.

Document US2017279734 A1 relates to distributed allocation of computing tasks and sub-tasks to computing resources, where assignments of sub-tasks to computing resources are recorded in a database.

Document US2002128001 A1 relates to distributed computing using heterogeneous wireless devices. It teaches a scheduler that receives a computing request, selects suitable available devices in a network, may split the requested activity into parallel tasks, distributes those tasks to the selected devices, and can use redundant task execution with abortion of duplicate tasks once one task has completed.

### SUMMARY

This disclosure provides systems and methods for secure distributed processing across networks of heterogeneous processing nodes.

In a first embodiment, a method for distributed processing includes receiving a job bundle at a command center, wherein the command center includes a processor, a network interface, and a memory. Further, the method includes determining a value of a dimension of the job bundle, determining, based on a predetermined rule applied to the determined value of the dimension of the job bundle, an aggregate processing cost for the job bundle. Further operations include identifying one or more available member devices communicatively connected to the command center via the network interface and splitting the job bundle into one or more threads based on at least one of the determined value of the dimension, the aggregate processing cost or the available member devices. Additionally, the method includes the operations of apportioning a thread of the one or more threads to a member device and transmitting, via the network interface, the apportioned thread to a secure processing environment of the member device.

In a second embodiment, a method for distributed processing includes receiving, via a network interface, at a member device comprising a processor and a memory, a thread from a command center, receiving from the command center, via the network interface, a control parameter for the thread and processing the thread based on the control parameter in a secure processing environment of the member device.

In a third embodiment, a non-transitory computer-readable medium contains program code, which when executed by a processor, causes a command center to receive a job bundle at the command center, the command center comprising the processor, a network interface, and a memory. The non-transitory computer-readable medium further contains program code, which when executed by the processor, causes the command center to determine a value of a dimension of the job bundle, determine, based on a predetermined rule applied to the determined value of the dimension of the job bundle, an aggregate processing cost for the job bundle, identify one or more available member devices communicatively connected to the command center via the network interface, split the job bundle into one or more threads based on at least one of the determined value of the dimension, the aggregate processing cost or the available member devices, apportion a thread of the one or more threads to a member device and transmit, via the network interface, the apportioned thread to a secure processing environment of the member device.

In a fourth embodiment, a command center comprises a processor, a network interface, and a memory containing instructions, which when executed by the processor, cause the command center to receive a job bundle. The instructions, when executed by the processor, further cause the command center to determine a value of a dimension of the job bundle, determine, based on a predetermined rule applied to the determined value of the dimension of the job bundle, an aggregate processing cost for the job bundle, identify one or more available member devices communicatively connected to the command center via the network interface, split the job bundle into one or more threads based on at least one of the determined value of the dimension, the aggregate processing cost or the available member devices, apportion a thread of the one or more threads to a member device, and transmit, via the network interface, the apportioned thread to a secure processing environment of the member device.

In a fifth embodiment, a member device comprises a network interface, a processor and a memory containing instructions which, when executed by the processor, cause the member device to receive, via the network interface, a thread from a command center, receive from the command center, a control parameter for the thread, and process the thread based on the control parameter in a secure processing environment of the member device.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

### BRIEF DESCRIPTION OF THE DRAWINGS

For a more complete understanding of this disclosure and its advantages, reference is now made to the following description, taken in conjunction with the accompanying drawings, in which:
FIGURE 1 illustrates an example of a network context including a command center and heterogeneous processing nodes according to certain embodiments of this disclosure;
FIGURE 2 illustrates an example of a command center according to certain embodiments of this disclosure;
FIGURE 3 illustrates an example of a member device according to certain embodiments of this disclosure;
FIGURE 4 illustrates layers of an I/O stack implemented in member devices according to certain embodiments of this disclosure;
FIGURE 5 illustrates operations of a method for secure distributed processing across networks of heterogeneous processing nodes at a command center according to certain embodiments of this disclosure; and
FIGURE 6 illustrates operations of a method for secure distributed processing across networks of heterogeneous processing nodes at a member device according to certain embodiments of this disclosure.

### DETAILED DESCRIPTION

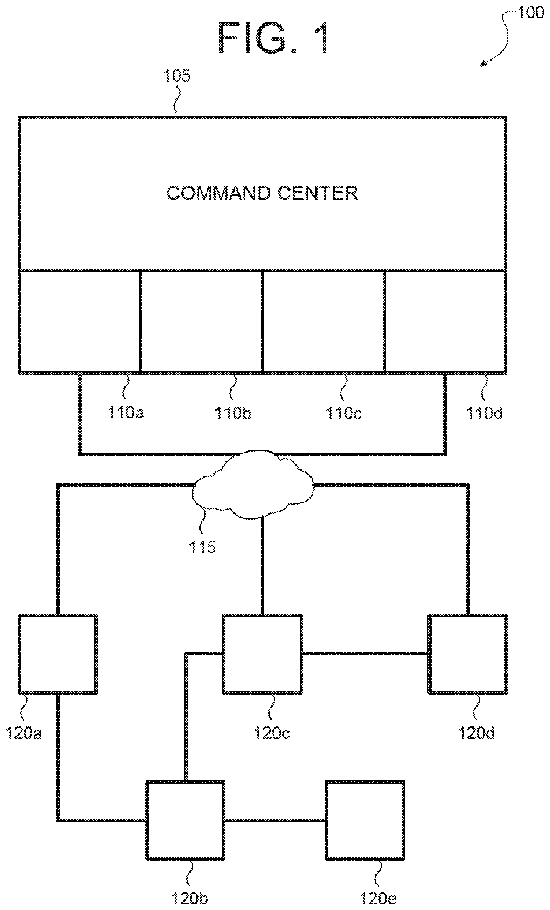

FIGURES 1 through 6, discussed below, and the various embodiments used to describe the principles of this disclosure in this patent document are by way of illustration only and should not be construed in any way to limit the scope of the disclosure. Those skilled in the art will understand that the principles of this disclosure may be implemented in any suitably arranged wireless communication system.

FIGURE 1 illustrates an example of a network context 100 including a command center and heterogeneous processing nodes according to certain embodiments of this disclosure.

According to certain embodiments, network context 100 includes a command center 105, one or more machines 110a, 110b, 110c and 110d providing an interface layer, one or more networks 115, and heterogeneous processing nodes 120a, 120b, 120c, 120d and 120e.

In the non-limiting example of FIGURE 1, command center 105 is a management server, such as a Hewlett-Packard Proliant server embodied on a single server rack. According to certain embodiments, command center 105 includes program code, which when executed by one of the cores of command center 105's processor, causes it to provide an interface layer for connecting through a network 115 (such as the internet) with processing nodes 120a-e. As suggested by the presence of machines 110a-d, multiple architectures for implementing command center 105 are possible and within the scope of this disclosure. According to some embodiments, command center 105 is a single server, and machines 110a-d comprise virtual machines executing on the server. According to other embodiments, command center 105 may comprise multiple physical servers, with each of machines 110a-d implemented on its own server. According to still other embodiments, command center 105 and machines 110a-d are implemented in the cloud, across a variety of machines. Numerous embodiments, wherein a command center comprises a network interface and processing and memory resources for implementing an appropriate interface layer and performing operations of the disclosed methods are possible and within the scope of this disclosure.

According to certain embodiments, network 115 is a wired network connecting command center 105 to each of heterogeneous processing nodes 120a, 120c and 120d. According to other embodiments, network 115 is a wireless network, such as a Wi-Fi or 3G wireless network. Network 115 hosts communications using contextually appropriate network protocols, including without limitation, HTTP, Aeron, Message Queueing Telemetry Transport (MQTT), NanoIP, ROLL (Routing Over Low power and Lossy networks), uIP and UDP. Other communication protocols are possible and within the scope of the present disclosure.

One or more networks of heterogeneous processing nodes 120a-120e connect to command center 105 through network 115. According to some embodiments, a processing node may connect directly to network 115, as shown in the non-limiting example of FIGURE 1 by processing node 120a. Alternatively, according to other embodiments, a processing node may connect indirectly to network 115 through another processing node, as shown in the non-limiting example of FIGURE 1 by processing node 120e. According to still embodiments, a processing node may connect both directly and indirectly to network 115, as shown in the non-limiting example of FIGURE 1 by processing node 120c. For the purposes of this disclosure, processing nodes connected, either directly or indirectly to command center 105 through network 115 comprise "member devices" of a processing network under the control of command center 105.

According to certain embodiments, the member devices at each of processing nodes 120a-120e are, at a minimum, heterogeneous with regard to their processing and job handling capacities. Facets of heterogeneity between the member devices at processing nodes 120a-120e include, without limitation, processing speed, available RAM, power requirements available storage, types of network connectivity (for example, Wi-Fi connectivity, 3G connectivity, GigaBit Ethernet), available sensors (for example, microphones, thermometers, cameras, barometers), processor functionality (for example, floating point processing capability, capacity for true random number generation), and number of processor cores. According to certain embodiments, member devices may be classified by the command center based on one or more of these attributes. For example, a device having resources analogous to those of certain generations of the Raspberry Pi (for example, a 1Ghz clock speed and 1GB of storage), would for the purposes of the command center's job orchestration logic, be classified as a "10X" device. As a further example, a device having resources analogous to certain generations of an Amazon Echo (256 MB of RAM, 4GB of storage, and multi-band wireless connectivity), may for the purposes of the command center's job orchestration logic, be classified as a "100X" device.

According to some embodiments, the heterogeneity of the member devices at the processing nodes includes additional dimensions, such as their availability to take on work at different times, and the processing resources available at different times. Thus, in contrast to, for example, a data center, wherein the management logic assumes that the processing capabilities of the machines potentially available to process jobs are not be time dependent, certain embodiments as disclosed and claimed can operate in contexts in which the underlying capacities of the available processing devices are more fluid and can change when, for example, devices are added or subtracted to the network, or devices are required to devote computing resources to tasks other than those orchestrated by the command center.

Although FIGURE 1 illustrates one example of a network context including a command center and heterogeneous processing nodes, other examples which do not fall within the scope of the claims, with more or less diffuse architectures may be possible. Additionally, according to some embodiments, a command center and processing node may be embodied on the same device.

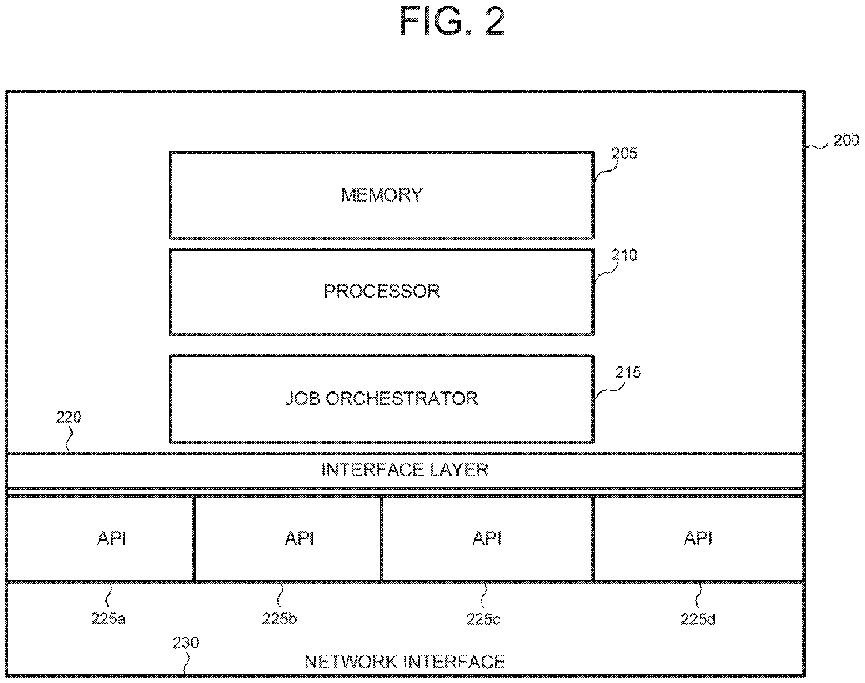

FIGURE 2 illustrates an example of a command center 200 according to certain embodiments of this disclosure.

In the example of FIGURE 2, command center 200 is implemented on a server and comprises a memory 205, a processor 210, a job orchestrator 215 and a network interface 230. Additionally, command center 200 is configured to implement an interface layer 220 comprising one or more instances shown as 225a-225d of application programming interfaces (API) through which command center 200 interacts with networked member devices (for example, the member devices at processing nodes 120a-120e in FIGURE 1).

Memory 205 comprise a non-transitory memory containing program code, which, when executed by processor 210, causes the command center to receive a job bundle via network interface 230, split the job bundle into threads according to one or more determined dimensions of the job bundle, apportion the threads to available member devices, and transmit each apportioned thread to a secure processing environment on each member device.

Additionally, according to certain embodiments, memory 205 comprises libraries of rules and of capability information for member devices acting as processing nodes. According to certain embodiments, memory 205 includes a library of rules mapping dimensions of job bundles (for example, a specified deadline for completion of a processing task, a networking requirement (*e*.*g*., is the member device required to send and receive data over a 3G network?) a volume of data to be processed, a parameter of data to be collected such as a number of sensors to be used or a time interval over which data is to be collected, availability of parallel processing, load sharing constraints, processor or sensor requirements (*e*.*g*., clock speed, whether a floating point processor or true random number generation is required) to processing cost values.

According to some embodiments, memory 205 may contain one or more libraries of data specifying the processing capabilities of member devices. In some embodiments, libraries of member device capabilities may be maintained at a high level of granularity, with data for each member device, including, without limitation, information as to the device's specific processor and memory resources. Alternatively, according to other embodiments, the library of device capability information consists of a dictionary of device identifiers and a classification (e.g., "10X" or "100X") determined for the device. Numerous variations are possible and within the scope of this disclosure.

In certain embodiments, processor 210 is a central processing unit (CPU) chip provided within a server. According to other embodiments, command center 200 may be implemented across multiple servers, or as part of a cloud computing system. In such embodiments, processor 210 consists of multiple separate processors operating across a dynamically changeable cast of server machines. According to still other embodiments, command center 200 may be implemented on a virtual machine, and processor 210 is a virtual CPU consisting of an assignment of processor resources of the physical machine(s) implementing the virtual machine.

In certain embodiments, command center 200 includes a job orchestrator 215. According to some embodiments, job orchestrator 215 receives, through network interface 230, information regarding the availability and usage of member devices at processing nodes. Job orchestrator 215 further receives, from processor 210, information regarding the currently apportioned threads and received job bundles. In some embodiments, the information regarding the currently apportioned threads and received job bundles may be further processed and reexpressed as one or more metrics of system load at the node and command center levels. Further, in some embodiments, member devices at processing nodes may periodically send updates to the command center regarding their current processing load and/or job status information. In the example of FIGURE 2, job orchestrator 215 operates to apportion threads between member devices based in part on current usage data received from member devices and expected usage based on information regarding queued job bundles received from memory 205 and processor 210. According to certain embodiments, job orchestrator 215 dynamically apportions job bundles to available member devices according to the devices' availability and capabilities. Further, in the example of Figure 2, job orchestrator 215 implements predetermined rules applied to, for example, the determined parameters of the received job bundles and stored information regarding the capabilities of member devices at processing nodes, to apportion threads in a way that optimizes the value of one or more metrics of processing performance. Metrics of processing performance whose values may be maximized at job orchestrator 215 include, without limitation, job bundle execution time, electricity consumption at the processing node, redundancy among processing nodes (to increase the success of probabilistic execution of threads), and utilization of processing nodes (for example, it may be desirable to apportion the threads of a job bundle to a minimum number of processing nodes, in order to hold other nodes in reserve for other job bundles).

Apportioned threads are passed from the command center 200 to member devices, and returned results are provided to the command center from member devices via an interface layer 220. In the non-limiting example of FIGURE 2, interface layer 220 includes network interface 230 and instances 225a-225d of application programming interfaces (API) through which command center 200 interacts with networked member devices (for example, the member devices at processing nodes 120a-120e in FIGURE 1).

In some embodiments, network interface 230 operates to interconnect command center 200 with one or more networks (for example, network 115 in FIGURE 1). Network interface 230 may, depending on embodiments, have a network address expressed as a node ID, a port number or an IP address. According to certain embodiments, network interface 230 is implemented as hardware, such as by a network interface card (NIC). Alternatively, network interface 230 may be implemented as software, such as by an instance of the java.net.NetworkInterface class. Additionally, according to some embodiments, network interface 230 supports communications over multiple protocols, such as TCP/IP as well as wireless protocols, such as 3G or Bluetooth.

In the non-limiting example of FIGURE 2 interface layer 220 contains one or more application programming interfaces (APIs) 225a-225d for establishing communications between command center 200 and member devices at processing nodes. According to certain embodiments, each of APIs 225a-225d may designate portions of memory 205 as reserved for inputs and outputs of job bundles which have been apportioned and sent out for processing.

According to some embodiments, each API of APIs 225a-225d maps a set of preset processing functions (for example, to perform a hash function) associated with the performance of a thread to be processed. In some embodiments, the preset processing functions may be expressed in an object oriented format, and as comprising methods and attributes of APIs 225a-225d. For example, in some embodiments, the preset functions may map to API objects of an IoT specific operating system, such as the Conera platform developed by V2COM, Inc.

According to some embodiments, the preset processing functions may be mapped to device or operating system specific commands. For example, according to some embodiments, the API may map command center level function "hash" to the Java method "hashCode." Alternatively, according to other embodiments, each API of APIs 225a-225d may map preset functions to command sets appropriate to the processing power of a particular category of member device (for example, the "10X" and "100X" devices discussed above.) Alternatively, in some embodiments, there may only be a single API, which maps preset functions to commands across the full spectrum of operating systems and processing capabilities found in member devices at the processing nodes. According to still further embodiments, individual APIs or sets of APIs among APIs 225a-225d may provide mappings of command center level preset functions to different data models, in order to support communications across a wide range of networking contexts and capabilities of member devices. For example, in the non-limiting example of FIGURE 2, APIs 225a & 225b may provide representational state transfer (REST) APIs associated with a JavaScript Object Notation (JSON) data model, while APIs 225c & 225d may provide simple object access protocol (SOAP) APIs associated with an extensible markup language (XML) data model. Numerous variations are possible and within the intended scope of this disclosure.

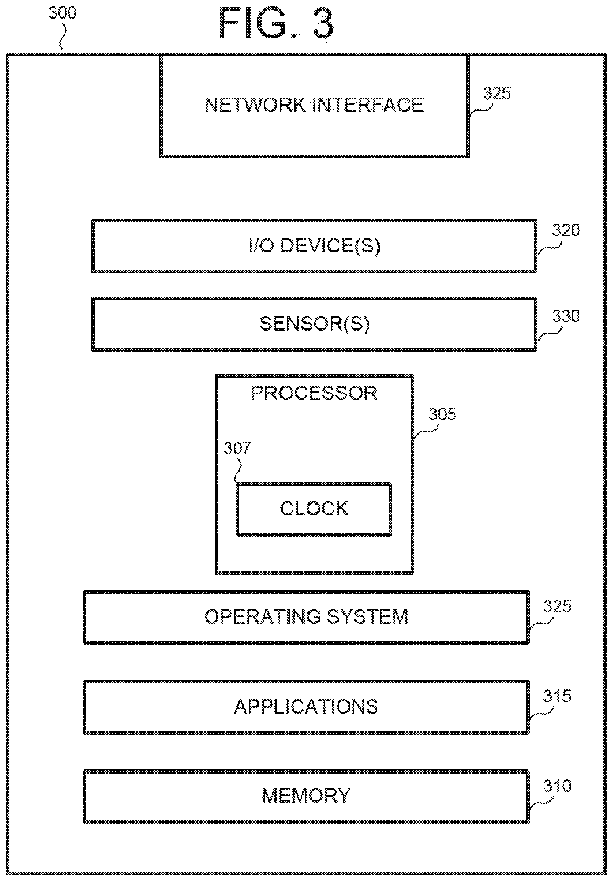

FIGURE 3 illustrates an example of a member device 300 according to certain embodiments of this disclosure. According to some embodiments, member device 300 is a "smart" type of another device, such as a household appliance or controller of other household appliances. According to other embodiments, member device 300 is a smartphone or a tablet computer. According to still other embodiments, member device 300 is a networked meter, or a development board attached to a point of presence (for example, a streetlight, a switch, a traffic light or a utility pole) of a public utility. According to still further embodiments, member device 300 can be a gateway device, such as an internet of things (IoT) gateway device. Examples of gateway devices which can function as a member device 300 include without limitation, the Neuron C Smart Concentrator and Dendrion Power Smart Submetering Unit by V2COM, Inc. and Numerous embodiments are possible and within the scope of this disclosure.

Member device 300 includes a processor 305. In the non-limiting example of Figure 3, processor 305 is a multi-function processor (as opposed to, for example, a function-specific ASIC) with one or more cores, which capable of executing program code stored in a non-transitory memory 310. In the non-limiting example of FIGURE 3, processor 305 includes, or is coupled with a clock 307, the speed of which provides one measure of the processor 305's processing capability. In some embodiments, processor 305 has features such as, for example and without limitation, floating point processing, true random number generation, or a smart cache, not found in the processor of other member devices.

Memory 310 contains program code which, when executed by processor 305, causes the processor to perform the functions of the member device 300 of which it is a part. Returning to the non-limiting example of a controller of home automation system discussed herein, memory 310 contains instructions, which when executed by processor 305, cause it to perform functions, such as reading and writing temperature data to memory 310, controlling the operation of input/output devices 320 to send control signals for devices within the home (for example, smart lightbulbs, electronically controlled heaters and air conditioners, and electronically controlled window shades). Additionally, regions of memory 310 can be allocated for data storage and storing additional program code, including one or more applications 315.

According to certain embodiments, applications 315 comprise program code or software which can be written to memory 310 and read and executed by processor 305. In the non-limiting example of FIGURE 3, applications 315 include, applications associated with the core function of the member device (for example, home automation applications, such as an application for automated control of internet connected lightbulbs), and virtual machines hosted on member device 300.

In the non-limiting example of FIGURE 3, member device 300 has input/output devices 320. According to certain embodiments, input/output devices 300 include a display (such as an LED display), a keyboard and a mouse. According to other embodiments, I/O devices 320 are a set of input/output pins connected to pins of a processor or controller, such as processor 305.

In the non-limiting example of FIGURE 3, member device 300 has an operating system (OS) 325, which supports member device 300's basic functions, including, without limitation, executing applications 315, receiving data from sensors 330, and sending and receiving data via network interface 325. According to some embodiments, OS 325 may be a general purpose operating system, such as Android or iOS. According to other embodiments, OS 325 may be a proprietary operating system such as Fire OS. According to still other embodiments, OS 325 is an IoT-oriented operating system, such as Conera by V2COM, Inc.

According to certain embodiments, member device 300 includes sensors 330. In the non-limiting example of FIGURE 3, sensors 330 include, without limitation, cameras, microphones, thermometers, barometric sensors, light meters, energy monitors, water meters, and rain sensors.

In some embodiments, network interface 325 operates to interconnect member device 300 with one or more networks (for example, network 115 in FIGURE 1). Network interface 325 may, depending on embodiments have a network address expressed as a node ID, a port number or an IP address. According to certain embodiments, network interface 325 is implemented as hardware, such as by a network interface card (NIC). Alternatively, network interface 325 may be implemented as software, such as by an instance of the java.net.NetworkInterface class. Additionally, according to some embodiments, network interface 325 supports communications over multiple protocols, such as TCP/IP as well as wireless protocols, such as 3G or Bluetooth.

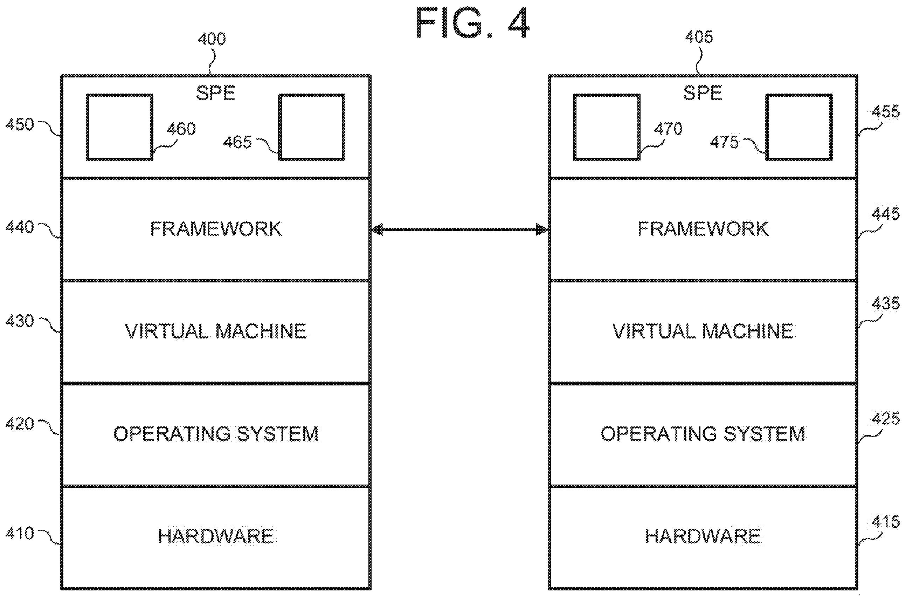

FIGURE 4 illustrates layers of an input/output ("I/O") stack implemented in member devices according to certain embodiments of this disclosure.

In the non-limiting example of FIGURE 4, two distinct member devices 400 and 405 are shown. In the non-limiting example of FIGURE 4, the processing architecture of each of member devices 400 is depicted as a hierarchy of abstraction layers, sometimes referred to collectively as an "I/O stack." According to certain embodiments, hardware layers 410 and 415 are the foundational level of the I/O stacks of member devices 400 and 405.

In some embodiments, each of hardware layers 410 and 415 comprise the processor and memory of the memory device (for example processor 305 and memory 310 shown in FIGURE 3), as well the componentry of the member device under the direct control of a processor of the member device (for example, sensors 330 and network interface 325 shown in FIGURE 3).

According to certain embodiments, operating system, or OS layers 420 and 425 comprise the next level of the I/O stacks of member devices 400 and 405. In some embodiments, OS layers 420 and 425 correspond to the functionalities provided by the operating systems (for example, OS 325 shown in FIGURE 3) of each of member devices 400 and 405. Further, in some embodiments the OS on each member device is the native, or originally provided OS of the member device. For example, if member device 400 is an Apple ^{®} smartphone, operating system 420 is, according to some embodiments, the "iOS" operating system. Similarly, if member device 405 is an Amazon ^{®} reading device, operating system 425 is, according to some embodiments, the "Fire" operating system. Alternatively, according to some embodiments, the operating system at layers 420 and 425 is a specially adapted operating system, which replaces or augments the member devices' native operating systems, such as where the member devices' native operating systems only supports low-level communications (such as at the physical layer in the OSI model). Examples of suitable operating systems include, without limitation, the Conera IoT OS developed by V2COM, Inc. According to certain embodiments, a replacement operating system may enable the member device to communicate at a higher level within the OSI model and transmit data in formats beyond raw bit streams.

According to certain embodiments, virtual machine layers 430 and 435 comprise the next layer in the I/O stacks of member devices 400 and 405. According to some embodiments, virtual machine layers 430 and 435 are implemented as Java Virtual Machines, Azure Virtual Machines or as components of a Kubernetes system. In the non-limiting example of FIGURE 4, each of virtual machine layers 430 and 435 operates to provide a secure container separating data, memory and processing resources for performing secure distributed processing across heterogeneous processing nodes. As such, each of virtual machine layers 430 and 435 separates the data and execution environment for processing apportioned threads from processes associated with the member device's native, or originally intended, functionality. For example, in cases where member device 400 is a network connected home automation controller, processes associated with the member device's functionality as a home automation controller, such as an interface for a web-based control application, cannot access data associated with an apportioned thread which is being processed at the member device.

According to certain embodiments, frameworks 440 and 445 comprise the next layer in the I/O stacks of member devices 400 and 405. According to some embodiments, frameworks 440 and 445 provide, at a logical level, the point of access for networked communications between member devices and between member devices and a command center (for example, command center 200 shown in FIGURE 2). In the non-limiting example of FIGURE 4, framework layer 440 of member device 400 is shown as connected to framework layer 445 of member device 405.

According to certain embodiments, each of framework layers 440 and 445 may implement system specific protocols or use commands (such as the preset functions implemented in the interface layer (for example, interface layer 220 shown in FIGURE 2). In such embodiments, the system specific protocols and commands may define separate data and control channels for communications between heterogeneous nodes and the command center of the distributed processing network. According to some embodiments, an apportioned thread may be transmitted in part or in whole to a member device using a control channel provided at one of framework layers 440 and 445. According to other embodiments, an apportioned thread may be transmitted in part or in whole to a member device using a data channel provided at one of framework layers 440 and 445. Further, according to some embodiments, a member device transmits a thread for which processing has been completed, to a command center via the data channel or the control channel, or a combination thereof.

In the non-limiting example of FIGURE 4, by implementing system specific protocols or using commands such as preset functions of the interface layer of a command center, or API specific methods, frameworks 440 and 445 further enforce the security of the data and processes performed within virtual machine layers 430 and 435 and above. For example, by only responding to commands and inputs expressed according to the preset commands of a command center, frameworks 440 and 445 may be less susceptible to spoofing attacks or requests expressed according to the command set of operating systems 420 and 425.

According to certain embodiments, secure processing environments ("SPEs") 450 and 455 comprise the next layer in the I/O stacks of member devices 400 and 405. According to certain embodiments, each of secure processing environments 450 and 455 provide, within each of virtual machines 430 and 435, an analogue to the trusted execution environment or "secure world" provided by certain physical processors. Threads 460, 465, 470 and 475 apportioned and transmitted by a command center are processed within each of SPEs 450 and 455. In some embodiments, multiple job threads are executed within a single SPE provided in the member device. According to other embodiments, there are multiple virtual machines running on a member device, and each virtual machine provides its own SPE, within which a job thread executes. Numerous variations are possible and within the contemplated scope of this disclosure.

Depending on, without limitation, a control parameter received from the command center and the underlying processing capabilities of hardware layers 410 and 415 the threads in each of SPEs 450 and 455 may be processed in parallel, or singly. Further, in some embodiments, each of the threads within an SPE are threads of different job bundles received and apportioned by a command center. Alternatively, in other embodiments, there are multiple threads belonging to the same job bundle being processed within the SPE of a particular member device. In some embodiments, a separate SPE is provided by the virtual machine and framework layers for each thread. According to such embodiments, proprietary data associated with one thread is not available to any other threads, thereby enhancing security.

The embodiments described with reference to FIGURE 4 are illustrative and not intended to be limitative of the scope of this disclosure. Other embodiments not shown in FIGURE 4 are possible and contemplated as part of this disclosure. For example, according to certain embodiments, a member device, such as member device 400, may implement multiple virtual machines. Further, each virtual machine may have its own secure processing environment. Additionally, according to other embodiments, multiple layers may be combined or implemented as part of a single abstraction layer. For example, in certain implementations utilizing the Conera operating system by V2COM, the Conera OS provides the framework layer and operating system layers.

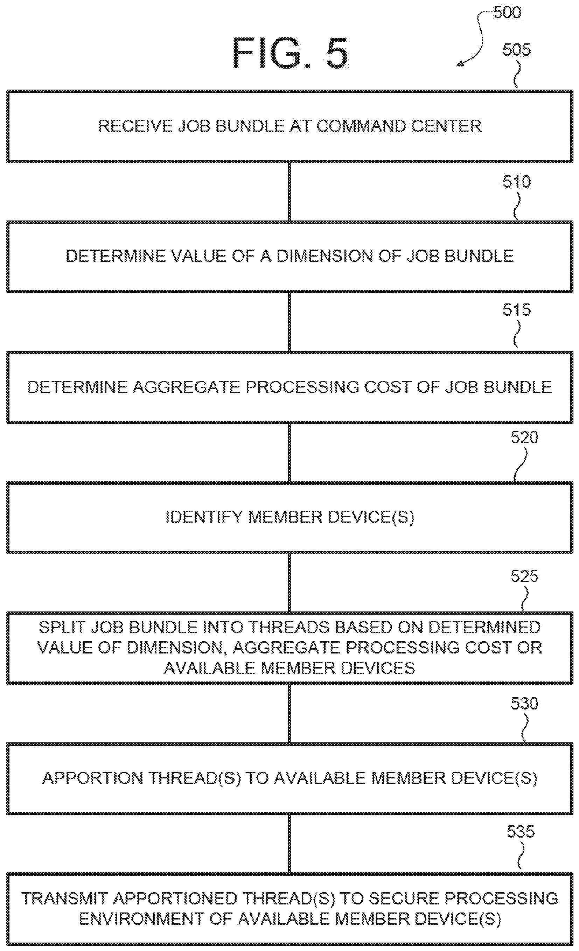

FIGURE 5 illustrates of a method 500 for secure distributed processing across networks of heterogeneous processing nodes at a command center. Job bundles are received at a command center, split into threads, and the threads are apportioned to member devices. Further, the threads are apportioned according to predetermined rules for optimizing the value of one or more metrics of processing performance, such as the time required to process a job bundle, or in cases where probabilistic execution is implemented, the overall probability of successful processing.

Method 500 comprises operation 505, wherein a job bundle is received at a command center. In some embodiments, the job bundle is a request for a processing task to be performed by a set of networked member devices, and which is received via a an interface provided by the command center. In some cases, the interface for receiving the job bundle may be a web interface, wherein the parameters are set by a visitor to a website. In other cases, the interface may receive job bundles from another machine or process without human interaction. According to certain embodiments, a job bundle is received as a set of data upon which one or more processing operations (for example, hashing, verification, or optical character recognition), along with a set of processing parameters (for example, a sensor requirement for member devices, a deadline for the processing task or a failure or interrupt handling parameter). According to other embodiments, a job bundle may contain executable code, and may also be received as an object comprising methods and attributes. The job bundle is received via a network interface of the command center (for example, network interface 230 shown in FIGURE 2) via a network (such as network 115), as a request for a data collection and processing subject to certain job parameters. Examples of such embodiments include, without limitation, an ongoing request to collect and analyze temperature data collected across a set of member devices (for example, gateways, meters or controllers located on houses or points of presence of public utilities) covering a particular geographic area. In an example which does not fall within the scope of the claims, the job bundle is received in a structured format, with data to be processed conforming to requirements (such as data to be analyzed being received in .SQL format) enforced by the interface. Data to be processed is unstructured (such as columns of a columnar database) and only the parameters defining the processing to be performed on the data conform to formats expected by the command center. Numerous variations are possible and within the intended scope of this disclosure.

In some embodiments, the job bundle received at the command center at operation 505 may have a payload developed and expressed in terms of the methods of the APIs (for example, APIs 225a-225d shown in FIGURE 2). In one non-limiting example, the job bundle may be developed based on the APIs provided with the Conera IoT OS.

Additionally, in some embodiments, the job bundle received at the command center may further comprise information defining shared objects and common memory areas within the job bundle. For example, certain processing operations may require memory resources beyond those provided at any one processing node. In such cases, the command center may make some of its own memory available as a shared memory resource for processing the job bundle. In some embodiments, the memory made available as a shared resource may be the "input" or "output" memory provided by each of the APIs of the command center.

In some cases, a job bundle may be initially structured (or split by job orchestrator at operation 525) in a way that permits probabilistic execution and optimization of a value of one or more metrics of processing performance. In the context of this disclosure, probabilistic execution encompasses the concept of assigning certain constituent threads of the job bundle to multiple processing nodes, in the expectation that one or more processing nodes will fail or be unable to execute its assigned thread. The number of processing nodes to which a thread has been assigned corresponds to an overall probability of the thread's successful execution by at least one processing node.

Threads of a job bundle which are assigned for probabilistic execution are initially expressed in the job bundle with reference to idempotent methods of the command center APIs. In the context of this disclosure, idempotent methods encompass operations which, for a given input, provide the same output, regardless of time or place (*e*.*g*., different processing nodes) of execution. As part of operation 530, threads of a job bundle expressed with reference to idempotent methods, are apportioned to multiple processing nodes for concurrent, probabilistic execution. In an example which does not fall within the scope of the claims, all of the job threads, including the job bundle itself are cancellable. Only threads assigned for probabilistic execution are each individually cancellable, and are cancelled in response to a signal from the command center that the thread has been successfully executed at a different node, or in response to a condition at the processing node (for example, a resource intensive task associated with the node's native function, such as speech recognition).

Method 500 proceeds to operation 510, wherein the command center determines one or more values of a dimension of the received job bundle. In some embodiments, the determined dimensions of a received job bundle are the amount of computational horsepower (expressed, for example, according to the number of FLOPS) required to process the job bundle, memory requirements associated with processing the job bundle, and availability requirements for processing the job bundle (for example, a minimum number of member devices required for successful probabilistic execution, or alternatively, a number of member devices which need to be kept free to process or receive other job bundles). Further examples of dimensions of a job bundle include, without limitation, memory usage associated with processing the job bundle, load sharing constraints between available member devices, processor requirements (for example, whether a floating point processor or true random number generation is required) associated with processing the job bundle, sensor requirements (for example, a job bundle entailing the collection of temperature data requires that some member devices have thermometers), a deadline for the job bundle, interrupt or failure protocols (for example, ignoring a thread which a member device fails to complete), or networking requirements (for example, a job bundle entailing analysis of wireless base station signal strengths requires that some member devices have, for example, 3G connectivity). Additional dimensions of a job bundle determined at operation 510 include further analysis of the memory requirements associated with processing the bundle, such as the relative amounts of volatile and permanent memory required at one or more processing nodes. Still further dimensions of the job bundle which can be determined at operation 510 include a determination as to whether the execution memory for the job bundle can be shared between multiple processing nodes, and rules for sharing memory resources between processing nodes. By sharing memory resources across processing nodes, certain embodiments according to this disclosure achieve a degree of biomimicry in their operation, in that, just as the human brain consolidates memories in particular regions of the brain during rapid eye motion ("REM") sleep, systems according to this disclosure may likewise consolidate the operational memory for executing the job bundle.

According to certain embodiments, the determination of a dimension of a job bundle may be performed by analyzing metadata provided as a part of a request from an interface where the job bundle was initially received by the command center. For example, in submitting the job for processing, a client of the interface may also specify dimensions of the job bundle and values thereof. Alternatively, determination of a value of a dimension of a job bundle may be performed by a rules engine at the command center, which applies one or more predetermined rules to analyze the data and instructions of the job bundle.

Method 500 then proceeds to operation 515, wherein the command center determines an aggregate processing cost for processing the job bundle. The aggregate processing cost is a static analysis performed by applying one or more predetermined rules to the one or more values of dimensions of the job bundle (for example dimensions of the job bundle determined at operation 510). For example, if, at operation 510, the number of member devices required to process a task and classification of the capabilities of the member devices (for example "10X," "100X" devices, etc.) are dimensions of the job bundle, then in the case where the command center determines that at least five (5) "10X" member devices are required to process the job, a predetermined rule specifying the number of devices required multiplied by the classification of the devices is applied. In this non-limiting example, the job bundle is determined to have a cost of fifty (50) units.

According to some embodiments, the aggregate processing cost determined at operation 515 may serve as the basis of a monetary cost to be charged to the entity submitting the job request. Alternatively, according to other embodiments, such as those where a volume of computational work operates as a proxy for scarcity or to enforce an aspect of the security of a job bundle (such as the computation of a large hash), the determination of an aggregate processing cost at operation 515 provides a gating function, excluding fraudulent job bundles or job bundles which do not conform to expected values of aggregated processing costs or expected values of specified dimensions.

Method 500 then proceeds to operation 520, wherein the command center identifies one or more available member devices communicatively connected to the command center via the network interface. In the example of FIGURE 5, member devices communicatively connected to the command center via the network transmit "heartbeat" messages at predetermined intervals, informing the command center of their connectivity and availability. Based on the received "heartbeat" messages, a register of job bundles currently being processed and information as to job bundles in a processing queue, the command center is able to determine which member devices are available. According to other embodiments, the command center performs an identification of available devices based on member devices satisfying defined constraints on the job bundle (such as processing capabilities).

Method 500 then proceeds to operation 525, wherein the control center splits the job bundle into threads for processing by available member devices. According to some embodiments, a job bundle is split into threads based on the determined value of one or more dimensions of the job bundle. For example, if a job bundle requires processing a total of 10 gigabytes of data, and each of the available member devices has only 1 GB of available storage, the command center may split the job bundle into ten or more threads, based on data volume and memory resources of the available devices as determined dimensions of the job bundle. A job bundle is split into threads based on the determined aggregate processing cost of the job bundle or according to the member devices available to process the job. According to other examples which do not fall within the scope of the claims, the command center splits the job bundle into threads based on other factors, such as deadline for completing the task.

In the example of FIGURE 5, as part splitting the job bundle into threads at operation 525, the command center also generates a set of commands for the member devices. According to certain embodiments, the commands for the member devices may be expressed in terms of the preset functions specified by an API of the command center (for example, APIs 225a-225d shown in FIGURE 2), or preset functions utilized by a framework (for example, framework layers 440 and 445 shown in FIGURE 4) on member devices processing the job thread. Further, splitting the job bundle into threads at operation 525 can, according to certain embodiments of this disclosure, include encrypting sensitive or user-specific data to be distributed to member devices as part of a thread for processing. According to such embodiments, the data of the entity submitting the job is secured against possible thefts or hacking of member devices processing a thread of the job bundle.

At operation 530, each of the determined threads is apportioned to an available member device. Such apportionment comprises: a.) specifically assigning each of the determined threads to a member device; and b.) creating or updating a registry or data structure recording the apportionment of each thread a job bundle to a specific member device. According to some embodiments, this data structure is maintained at the command center. According to other embodiments, the data structure recording the assignment or apportionment of job threads to member devices may be maintained across multiple machines as a safeguard against failure or loss of a copy of the registry at the command center.

At operation 535, the command center transmits each of the apportioned threads to a secure processing environment (for example, SPEs 450 and 455 shown in FIGURE 5) of member devices comprising processing nodes of a distributed network. In some embodiments, the apportioned threads are transmitted via a network interface of the command center, to a network, and then to a framework on each of the member devices. In other embodiments, including without limitation, embodiments employing the V2COM Conera APIs at the command center, the apportioned threads are transmitted through a control channel provided by the API.

Further, at operation 535, one or more control parameters are transmitted, such as a deadline for completing the processing task or failure/interrupt parameters corresponding to each thread of the apportioned threads. Additionally, in some embodiments, as part of transmitting apportioned threads to SPEs on available member devices, the command center also transmits a copy of the command center's public key for encryption, so that, upon completing processing a thread, the member devices can encrypt the results of their processing before transmitting the completed thread back to the command center.

According to certain embodiments, threads for execution may be separately transmitted and triggered for execution. For example, at operation 535, the command center may transmit the threads to the member devices through a control channel provided by APIs at the control center. The threads may then be received at the member devices and pre-loaded into the secure processing environments of the member devices. Upon satisfaction of a predetermined condition (for example, receiving confirmation that a threshold number of threads have been successfully received and loaded in member devices' SPEs), the command center may then issue a call stack, triggering execution of each of the received threads.

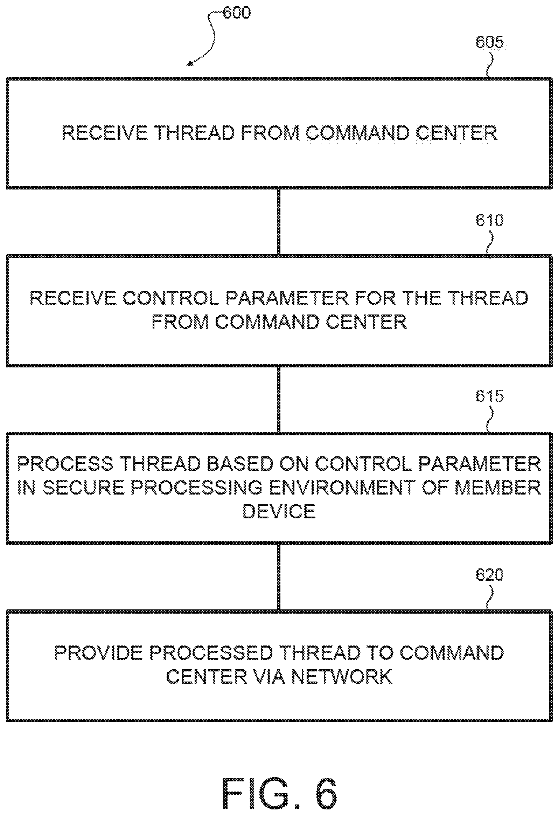

FIGURE 6 illustrates operations of a method 600 for secure distributed processing across networks of heterogeneous processing nodes at a member device.

Method 600 begins at operation 605, wherein a member device receives an apportioned thread from a command center via a network. According to other embodiments, a member device may receive an apportioned thread from a command center indirectly, such as via a connection with another member device (for example, the connection between frameworks 440 and 445 shown in FIGURE 4). Depending on, without limitation, the processing capabilities and availability of the member devices, each member device may only receive a single thread of a job bundle from the command center, or member devices may receive multiple threads of a job bundle from the command center.

At operation 610, each member device receives one or more control parameters associated with processing the thread from a command center. Depending on embodiments, the control parameter may specify at least one of, a deadline for completion of the apportioned thread, failure/interrupt instructions for processing the apportioned thread, or encryption/decryption instructions for transmitting the thread to the command center upon completion.

At operation 615, the member device processes the apportioned thread in the secure processing environment of the member device according to the control parameter received from the control center. Further, at operation 620, the member device provides the processed thread to the command center via a network. According to certain embodiments, as part of transmitting the completed job thread back to the command center, the member device may sign or encrypt the completed thread using the public key of the command center, or some other indicia of trustworthiness to the command center that the processed thread was received from the member device to which it was assigned.

In the example of FIGURE 5, the security of the system is backstopped by the security in the top layer of the I/O stack (for example, the I/O stack shown in FIGURE 4) by the application-layer security provided through the secure processing environment of the member device. Thus, while the network to which member devices are connected may be secure, and the member devices themselves may not be secure, the implementation of a secure processing environment at the member device allows the system of distributed processing nodes to nonetheless be secure. According to certain embodiments, the security of the system for distributed processing is enforced because the secure processing environment of each member device is inaccessible to other processes executing on the member device. Additionally, in some embodiments, the security of the system may be further enforced by encrypting content entering and exiting the SPE, and the SPE only accepting content using the command set of the command center's APIs.

The scope of patented subject matter is defined only by the claims.

## Claims

1. A method for secure distributed processing across networks of heterogeneous processing nodes comprising member devices, the method comprising:
receiving (505) a job bundle as a request for collecting data and for processing subject to job parameters at a command center comprising a processor, a network interface, and a memory, wherein data to be processed are unstructured and only the job parameters defining the processing to be performed on the data conform to formats expected by the command center;
determining (510) a value of a dimension of the job bundle, wherein the dimension of the job bundle includes at least one of a memory usage, a clock speed of a processor, whether threads of the job bundle are to be processed in parallel, load sharing constraints between available member devices, presence of a floating point processor, a required sensor, a deadline for the job bundle, a processing interrupt handling parameter, availability of true random number generation or a parameter associated with a networking capability of member devices;
determining (515), based on predetermined rules applied to the determined value of the dimension of the job bundle, an aggregate processing cost for the job bundle, wherein the rules optimize one or more metrics of processing performance;
identifying (520) one or more available member devices communicatively connected to the command center via the network interface;
splitting (525) the job bundle into threads based on the aggregate processing cost or the one or more available member devices, wherein threads are expressed in the job bundle with reference to idempotent methods, wherein threads are assigned for probabilistic execution and are apportioned to multiple processing nodes for concurrent, probabilistic execution, wherein only threads assigned for probabilistic execution are individually cancellable and are cancelled in response to a signal from the command center that the thread has been successfully executed at a different node or in response to a condition at a processing node;
apportioning (530) a thread from the job bundle to one or more available member devices, wherein apportioning the thread comprises: assigning the thread to the member device, and creating or updating a registry or data structure recording the assigned thread; and
transmitting (535), via the network interface, the apportioned thread to a secure processing environment of the one or more member devices and a control parameter for the thread, wherein the secure processing environment comprises a virtual machine layer that operates to separate processing resources of the one or more member devices to provide a secure container separating data, memory and processing resources for performing a secured processing execution.

2. The method of claim 1, wherein the apportioned thread is transmitted via a control channel between the command center and the member device.

3. The method of claim 1, wherein the threads are apportioned to be performed in parallel.

4. The method of claim 1, further comprising:
receiving, at the command center, via the network interface, a completed apportioned thread from the member device.

5. A method for secure distributed processing across networks of heterogeneous processing nodes, the method comprising:
receiving, via a network interface, at a member device comprising a processor and a memory, a thread of a job bundle from a command center, wherein the job bundle is a request for collecting data and for processing subject to job parameters, wherein data collected to be processed are unstructured and only the job parameters defining the processing to be performed on the data conform to formats expected by the command center;
receiving from the command center, via the network interface, a control parameter for the thread;
processing the thread based on the control parameter in a secure processing environment of the member device, wherein the thread is apportioned to multiple processing nodes for concurrent, probabilistic execution, wherein the thread is individually cancellable and is assigned for probabilistic execution with reference to idempotent methods, wherein only threads assigned for probabilistic execution are individually cancellable and cancelled in response to a signal from the command center that the thread has been successfully executed at a different node, wherein the control parameter specifies at least one of, a deadline for completion of the thread, failure/interrupt instructions for processing the thread, or encryption/decryption instructions for transmitting the thread to the command center upon completion, wherein the secure processing environment comprises a virtual machine layer that operates to separate processing resources of the member device to provide a secure container separating data, memory and processing resources for performing a secured processing execution.

6. The method of claim 5, wherein the secure processing environment is provided by a framework operating on Java virtual machine implemented on the member device.

7. The method of claim 5, further comprising:
receiving, via the network interface, a second thread from the command center,
receiving, from the command center, via the network interface, a control parameter for the second thread; and
processing the thread based on the control parameter for the second thread in a second secure processing environment of the member device,
wherein processes and memory of the member device associated with the secure processing environment are isolated from processes and memory associated with the second secure processing environment.

8. The method of claim 5, wherein processes and memory associated with the secure processing environment of the member device are isolated from processes and memory associated with an application running on the member device.

9. The method of claim 6, wherein the framework on the member device is communicatively connected to a framework on a second member device.

10. The method of claim 5, wherein the control parameter is associated with at least one of a schedule for processing the thread, an interrupt protocol for the thread or a failure protocol for the thread.

11. A non-transitory computer-readable medium containing program code for secure distributed processing across networks of heterogeneous processing nodes comprising member devices, which when executed by a processor, causes a command center to:
receive a job bundle as a request for collecting data and for processing subject to job parameters at the command center, the command center comprising the processor, a network interface, and a memory, wherein data to be processed are unstructured and only the job parameters defining the processing to be performed on the data conform to formats expected by the command center;
determine a value of a dimension of the job bundle, wherein the dimension of the job bundle includes at least one of a memory usage, a clock speed of a processor, whether threads of the job bundle are to be processed in parallel, load sharing constraints between available member devices, presence of a floating point processor, a required sensor, a deadline for the request, a processing interrupt handling parameter corresponding to each thread of the apportioned threads, availability of true random number generation or a parameter associated with a networking capability;
determine, based on predetermined rules applied to the determined value of the dimension of the job bundle, a computer processing cost for the job bundle, wherein the rules optimize one or more metrics of processing performance;
identify a plurality of available member devices communicatively connected to the command center via the network interface;
split the job bundle into threads based on the computer processing cost or the one or more available member devices, wherein only threads assigned for probabilistic execution are individually cancellable and are cancelled in response to a signal from the command center that the thread has been successfully executed at a different node, wherein threads are assigned for probabilistic execution with reference to idempotent methods and are apportioned to multiple processing nodes for concurrent, probabilistic execution;
apportion a thread from the job bundle to one or more available member devices, wherein apportioning the thread comprises: assigning the thread to the member device, and creating or updating a registry or data structure recording the assigned thread; and
transmit, via the network interface, the apportioned thread to a secure processing environment of the one or more available member devices and a control parameter for the thread, wherein the secure processing environment comprises a virtual machine layer that operates to separate processing resources of the one or more member devices to provide a secure container separating data, memory and processing resources for performing a secured processing execution.

12. The non-transitory computer-readable medium of claim 11, wherein the apportioned thread is transmitted via a control channel between the command center and the member device.

13. The non-transitory computer-readable medium of claim 11, wherein the threads are apportioned to be performed in parallel.

14. The non-transitory computer-readable medium of claim 11, comprising program code which, when executed by the processor, causes the command center to:
receive, via the network interface, a completed apportioned thread from the member device.

15. A command center for secure distributed processing across networks of heterogeneous processing nodes comprising member devices, the command center comprising:
a processor;
a network interface; and
a memory containing instructions which, when executed by the processor, cause the command center to:
receive a job bundle as a request for collecting data and for processing subject to job parameters, wherein data to be processed are unstructured and only the job parameters defining the processing to be performed on the data conform to formats expected by the command center;
determine a value of a dimension of the job bundle, wherein the dimension of the job bundle includes at least one of a memory usage, a clock speed of a processor, whether threads of the job bundle are to be processed in parallel, load sharing constraints between available member devices, presence of a floating point processor, a required sensor, a deadline for the job bundle, a processing interrupt handling parameter corresponding to each thread of the apportioned threads, availability of true random number generation or a parameter associated with a networking capability,
determine, based on predetermined rules applied to the determined value of the dimension of the job bundle, a computer processing cost for the job bundle, wherein the rules optimize one or more metrics of processing performance,
identify a plurality of available member devices communicatively connected to the command center via the network interface,
split the job bundle into a plurality of threads based on the computer processing cost or the available member devices, wherein at least several threads of the plurality of threads are individually cancellable and wherein threads that are expressed in the job bundle with reference to idempotent methods are assigned for probabilistic execution of idempotent method, wherein only threads assigned for probabilistic execution are individually cancellable and are cancelled in response to a signal from the command center that the thread has been successfully executed at a different node,
apportion a plurality of threads from the job bundle to a plurality of member devices, wherein apportioning the thread comprises: assigning the thread to the member device, and creating or updating a registry or data structure recording the assigned thread, and
transmit, via the network interface, the apportioned thread to a secure processing environment of the plurality of available member devices and a control parameter for the thread, wherein the secure processing environment comprises a virtual machine layer that operates to separate processing resources of the one or more member devices to provide a secure container separating data, memory and processing resources for performing a secured processing execution.

16. A member device for secure distributed processing across networks of heterogeneous processing nodes, comprising:
a network interface;
a processor; and
a memory containing instructions which, when executed by the processor, cause the member device to:
receive, via the network interface, a thread of a job bundle from a command center, wherein the job bundle is a request for collecting data and for processing subject to job parameters, wherein data collected to be processed are unstructured and only the job parameters defining the processing to be performed on the data conform to formats expected by the command center, wherein the thread is individually cancellable and is assigned for probabilistic execution of idempotent methods, wherein only threads assigned for probabilistic execution are individually cancellable and are cancelled in response to a signal from the command center that the thread has been successfully executed at a different node;
receive from the command center, via the network interface, a control parameter for the thread,
process the thread based on the control parameter in a secure processing environment of the member device, wherein the secure processing environment comprises a virtual machine layer operating to separate processing resources of the member device to provide a secure container separating data, memory and processing resources for performing a secured processing execution.

## Patentansprüche

1. Verfahren zur sicheren verteilten netzwerkübergreifenden Verarbeitung von heterogenen Verarbeitungsknoten, die Mitgliedsvorrichtungen umfassen, wobei das Verfahren Folgendes umfasst:
Empfangen (505) eines Auftragsbündels als eine Anforderung zum Sammeln von Daten und zum Verarbeiten gemäß Auftragsparametern in einer Befehlszentrale, die einen Prozessor, eine Netzwerkschnittstelle und einen Speicher umfasst, wobei die zu verarbeitenden Daten unstrukturiert sind und nur die Auftragsparameter, die die an den Daten durchzuführende Verarbeitung definieren, den von der Befehlszentrale erwarteten Formaten entsprechen;
Bestimmen (510) eines Werts einer Dimension des Auftragsbündels, wobei die Dimension des Auftragsbündels mindestens eines von einer Speichernutzung, einer Taktfrequenz eines Prozessors, ob Threads des Auftragsbündels parallel zu verarbeiten sind, Lastverteilungsbeschränkungen zwischen verfügbaren Mitgliedsvorrichtungen, Anwesenheit eines Gleitkommaprozessors, einem erforderlichen Sensor, einer Frist für das Auftragsbündel, einem Parameter zur Behandlung von Verarbeitungsunterbrechungen, Verfügbarkeit einer echten Zufallszahlengenerierung oder einem Parameter, der einer Netzwerkfähigkeit von Mitgliedsvorrichtungen zugeordnet ist, enthält;
Bestimmen (515) von aggregierten Verarbeitungskosten für das Auftragsbündel basierend auf vorbestimmten Regeln, die auf den bestimmten Wert der Dimension des Auftragsbündels angewendet werden, wobei die Regeln eine oder mehrere Metriken der Verarbeitungsleistung optimieren;
Identifizieren (520) einer oder mehrerer verfügbarer Mitgliedsvorrichtungen, die über die Netzwerkschnittstelle mit der Befehlszentrale kommunikativ verbunden sind;
Aufteilen (525) des Auftragsbündels in Threads basierend auf den aggregierten Verarbeitungskosten oder der einen oder den mehreren verfügbaren Mitgliedsvorrichtungen, wobei Threads im Auftragsbündel unter Bezugnahme auf idempotente Verfahren ausgedrückt werden, wobei Threads zur probabilistischen Ausführung zugewiesen sind und zur gleichzeitigen, probabilistischen Ausführung mehreren Verarbeitungsknoten zugeteilt werden, wobei nur die für die probabilistische Ausführung zugewiesenen Threads individuell abbrechbar sind und als Reaktion auf ein Signal von der Befehlszentrale, dass der Thread an einem anderen Knoten erfolgreich ausgeführt wurde, oder als Reaktion auf eine Bedingung an einem Verarbeitungsknoten abgebrochen werden;
Zuteilen (530) eines Threads aus dem Auftragsbündel an eine oder mehrere verfügbare Mitgliedsvorrichtungen, wobei das Zuweisen des Threads Folgendes umfasst: Zuordnen des Threads an die Mitgliedsvorrichtung und Erstellen oder Aktualisieren eines Registers oder einer Datenstruktur, in der der zugewiesene Thread erfasst wird; und
Übertragen (535) über die Netzwerkschnittstelle des zugeteilten Threads an eine sichere Verarbeitungsumgebung der einen oder der mehreren Mitgliedsvorrichtungen und eines Steuerparameters für den Thread, wobei die sichere Verarbeitungsumgebung eine Schicht einer virtuellen Maschine umfasst, die dazu betrieben wird, Verarbeitungsressourcen der einen oder der mehreren Mitgliedsvorrichtungen zu trennen, um einen sicheren Container bereitzustellen, der Daten, Speicher und Verarbeitungsressourcen trennt, um eine gesicherte Verarbeitungsausführung durchzuführen.

2. Verfahren nach Anspruch 1, wobei der zugeteilte Thread über einen Steuerkanal zwischen der Befehlszentrale und der Mitgliedsvorrichtung übertragen wird.

3. Verfahren nach Anspruch 1, wobei die Threads derart zugeteilt werden, dass sie parallel durchgeführt werden.

4. Verfahren nach Anspruch 1, ferner umfassend:
Empfangen eines fertiggestellten, zugeteilten Threads von der Mitgliedsvorrichtung in der Befehlszentrale über die Netzwerkschnittstelle.

5. Verfahren zur sicheren verteilten netzwerkübergreifenden Verarbeitung von heterogenen Verarbeitungsknoten, wobei das Verfahren Folgendes umfasst:
Empfangen über eine Netzwerkschnittstelle an einer Mitgliedsvorrichtung, die einen Prozessor und einen Speicher umfasst, eines Threads eines Auftragsbündels von einer Befehlszentrale, wobei das Auftragsbündel eine Anforderung zum Sammeln von Daten und zum Verarbeiten gemäß Auftragsparametern ist, wobei die zu verarbeitenden gesammelten Daten unstrukturiert sind und nur die Auftragsparameter, die die an den Daten durchzuführende Verarbeitung definieren, den von der Befehlszentrale erwarteten Formaten entsprechen;
Empfangen eines Steuerparameters für den Thread von der Befehlszentrale über die Netzwerkschnittstelle;
Verarbeiten des Threads basierend auf dem Steuerparameter in einer sicheren Verarbeitungsumgebung der Mitgliedsvorrichtung, wobei der Thread mehreren Verarbeitungsknoten zur gleichzeitigen probabilistischen Ausführung zugewiesen wird, wobei der Thread individuell abbrechbar ist und unter Bezugnahme auf idempotente Verfahren zur probabilistischen Ausführung zugeteilt wird, wobei nur Threads, die zur probabilistischen Ausführung zugewiesen sind, individuell abbrechbar sind und als Reaktion auf ein Signal von der Befehlszentrale abgebrochen werden, dass der Thread an einem anderen Knoten erfolgreich ausgeführt wurde, wobei der Steuerparameter mindestens eines von einer Frist für die Fertigstellung des Threads, Fehler-/Unterbrechungsanweisungen zum Verarbeiten des Threads oder Verschlüsselungs-/Entschlüsselungsanweisungen zum Übertragen des Threads an die Befehlszentrale nach Fertigstellung spezifiziert, wobei die sichere Verarbeitungsumgebung eine Schicht einer virtuellen Maschine umfasst, die dazu betrieben wird, Verarbeitungsressourcen der Mitgliedsvorrichtung zu trennen, um einen sicheren Container bereitzustellen, der Daten, Speicher und Verarbeitungsressourcen trennt, um eine gesicherte Verarbeitungsausführung durchzuführen.

6. Verfahren nach Anspruch 5, wobei die sichere Verarbeitungsumgebung durch ein Framework bereitgestellt wird, das auf einer auf der Mitgliedsvorrichtung implementierten virtuellen Java-Maschine betrieben wird.

7. Verfahren nach Anspruch 5, ferner umfassend:
Empfangen eines zweiten Threads von der Befehlszentrale über die Netzwerkschnittstelle,
Empfangen eines Steuerparameters für den zweiten Thread von der Befehlszentrale über die Netzwerkschnittstelle; und
Verarbeiten des Threads basierend auf dem Steuerparameter für den zweiten Thread in einer zweiten sicheren Verarbeitungsumgebung der Mitgliedsvorrichtung,
wobei Prozesse und Speicher der Mitgliedsvorrichtung, die der sicheren Verarbeitungsumgebung zugeordnet sind, von Prozessen und Speicher isoliert sind, die der zweiten sicheren Verarbeitungsumgebung zugeordnet sind.

8. Verfahren nach Anspruch 5, wobei Prozesse und Speicher, die der sicheren Verarbeitungsumgebung der Mitgliedsvorrichtung zugeordnet sind, von Prozessen und Speicher isoliert sind, die einer auf der Mitgliedsvorrichtung laufenden Anwendung zugeordnet sind.

9. Verfahren nach Anspruch 6, wobei das Framework auf der Mitgliedsvorrichtung kommunikativ mit einem Framework auf einer zweiten Mitgliedsvorrichtung verbunden ist.

10. Verfahren nach Anspruch 5, wobei der Steuerparameter mindestens einem von einem Zeitplan für das Verarbeiten des Threads, einem Unterbrechungsprotokoll für den Thread oder einem Fehlerprotokoll für den Thread zugeordnet ist.

11. Nichttransitorisches computerlesbares Medium, das Programmcode für eine sichere verteilte netzwerkübergreifende Verarbeitung von heterogenen Verarbeitungsknoten umfasst, die Mitgliedsvorrichtungen umfassen, der bei Ausführung durch einen Prozessor eine Befehlszentrale zu Folgendem veranlasst:
Empfangen eines Auftragsbündels als eine Anforderung zum Sammeln von Daten und zum Verarbeiten gemäß Auftragsparametern in der Befehlszentrale, wobei die Befehlszentrale den Prozessor, eine Netzwerkschnittstelle und einen Speicher umfasst, wobei die zu verarbeitenden Daten unstrukturiert sind und nur die Auftragsparameter, die die an den Daten durchzuführende Verarbeitung definieren, den von der Befehlszentrale erwarteten Formaten entsprechen;
Bestimmen eines Werts einer Dimension des Auftragsbündels, wobei die Dimension des Auftragsbündels mindestens eines von einer Speichernutzung, einer Taktfrequenz eines Prozessors, ob Threads des Auftragsbündels parallel zu verarbeiten sind, Lastverteilungsbeschränkungen zwischen verfügbaren Mitgliedsvorrichtungen, Anwesenheit eines Gleitkommaprozessors, einem erforderlichen Sensor, einer Frist für die Anforderung, einem Parameter zur Behandlung von Verarbeitungsunterbrechungen, der jedem Thread der zugeteilten Threads entspricht, Verfügbarkeit einer echten Zufallszahlengenerierung oder einem Parameter, der einer Netzwerkfähigkeit zugeordnet ist, enthält;
Bestimmen von Computerverarbeitungskosten für das Auftragsbündel basierend auf vorbestimmten Regeln, die auf den bestimmten Wert der Dimension des Auftragsbündels angewendet werden, wobei die Regeln eine oder mehrere Metriken der Verarbeitungsleistung optimieren;
Identifizieren einer Vielzahl von verfügbaren Mitgliedsvorrichtungen, die über die Netzwerkschnittstelle mit der Befehlszentrale kommunikativ verbunden sind;
Aufteilen des Auftragsbündels in Threads basierend auf den Computerverarbeitungskosten oder der einen oder den mehreren verfügbaren Mitgliedsvorrichtungen, wobei nur Threads, die für die probabilistische Ausführung zugewiesen sind, individuell abgebrochen werden können und als Reaktion auf ein Signal von der Befehlszentrale abgebrochen werden, dass der Thread an einem anderen Knoten erfolgreich ausgeführt wurde, wobei Threads unter Bezugnahme auf idempotente Verfahren für die probabilistische Ausführung zugewiesen sind und mehreren Verarbeitungsknoten zur gleichzeitigen, probabilistischen Ausführung zugeteilt werden;
Zuteilen eines Threads aus dem Auftragsbündel an eine oder mehrere verfügbare Mitgliedsvorrichtungen, wobei das Zuteilen des Threads Folgendes umfasst: Zuweisen des Threads an die Mitgliedsvorrichtung und Erstellen oder Aktualisieren eines Registers oder einer Datenstruktur, in der der zugewiesene Thread erfasst wird; und
Übertragen über die Netzwerkschnittstelle des zugeteilten Threads an eine sichere Verarbeitungsumgebung der einen oder der mehreren verfügbaren Mitgliedsvorrichtungen und eines Steuerparameters für den Thread, wobei die sichere Verarbeitungsumgebung eine Schicht einer virtuellen Maschine umfasst, die dazu betrieben wird, Verarbeitungsressourcen der einen oder der mehreren Mitgliedsvorrichtungen zu trennen, um einen sicheren Container bereitzustellen, der Daten, Speicher und Verarbeitungsressourcen trennt, um eine gesicherte Verarbeitungsausführung durchzuführen.

12. Nichttransitorisches computerlesbares Medium nach Anspruch 11, wobei der zugeteilte Thread über einen Steuerkanal zwischen der Befehlszentrale und der Mitgliedsvorrichtung übertragen wird.

13. Nichttransitorisches computerlesbares Medium nach Anspruch 11, wobei die Threads derart zugeteilt werden, dass sie parallel durchgeführt werden.

14. Nichttransitorisches computerlesbares Medium nach Anspruch 11, umfassend Programmcode, der, wenn er vom Prozessor ausgeführt wird, die Befehlszentrale zu Folgendem veranlasst:
Empfangen eines fertiggestellten, zugeteilten Threads von der Mitgliedsvorrichtung über die Netzwerkschnittstelle.

15. Befehlszentrale zur sicheren verteilten netzwerkübergreifenden Verarbeitung von heterogenen Verarbeitungsknoten, die Mitgliedsvorrichtungen umfassen, wobei die Befehlszentrale Folgendes umfasst:
einen Prozessor;
eine Netzwerkschnittstelle; und
einen Speicher, der Anweisungen enthält, die, wenn sie vom Prozessor ausgeführt werden, die Befehlszentrale zu Folgendem veranlassen:
Empfangen eines Auftragsbündels als eine Anforderung zum Sammeln von Daten und zum Verarbeiten gemäß Auftragsparametern, wobei die zu verarbeitenden Daten unstrukturiert sind und nur die Auftragsparameter, die die an den Daten durchzuführende Verarbeitung definieren, den von der Befehlszentrale erwarteten Formaten entsprechen;
Bestimmen eines Werts einer Dimension des Auftragsbündels, wobei die Dimension des Auftragsbündels mindestens eines von einer Speichernutzung, einer Taktfrequenz eines Prozessors, ob Threads des Auftragsbündels parallel zu verarbeiten sind, Lastverteilungsbeschränkungen zwischen verfügbaren Mitgliedsvorrichtungen, Anwesenheit eines Gleitkommaprozessors, einem erforderlichen Sensor, einer Frist für das Auftragsbündel, einem Parameter zur Behandlung von Verarbeitungsunterbrechungen, der jedem Thread der zugeteilten Threads entspricht, Verfügbarkeit einer echten Zufallszahlengenerierung oder einem Parameter, der einer Netzwerkfähigkeit zugeordnet ist, enthält,
Bestimmen von Computerverarbeitungskosten für das Auftragsbündel basierend auf vorbestimmten Regeln, die auf den bestimmten Wert der Dimension des Auftragsbündels angewendet werden, wobei die Regeln eine oder mehrere Metriken der Verarbeitungsleistung optimieren,
Identifizieren einer Vielzahl von verfügbaren Mitgliedsvorrichtungen, die über die Netzwerkschnittstelle mit der Befehlszentrale kommunikativ verbunden sind,
Aufteilen des Auftragsbündels in eine Vielzahl von Threads basierend auf den Computerverarbeitungskosten oder den verfügbaren Mitgliedsvorrichtungen, wobei mindestens mehrere Threads der Vielzahl von Threads individuell abbrechbar sind und wobei Threads, die im Auftragsbündel unter Bezugnahme auf idempotente Verfahren ausgedrückt sind, der probabilistischen Ausführung des idempotenten Verfahrens zugewiesen werden, wobei nur die für die probabilistische Ausführung zugewiesenen Threads individuell abbrechbar sind und als Reaktion auf ein Signal von der Befehlszentrale abgebrochen werden, dass der Thread an einem unterschiedlichen Knoten erfolgreich ausgeführt wurde,
Zuteilen einer Vielzahl von Threads aus dem Auftragsbündel an eine Vielzahl von Mitgliedsvorrichtungen, wobei das Zuteilen des Threads Folgendes umfasst: Zuweisen des Threads an die Mitgliedsvorrichtung und Erstellen oder Aktualisieren eines Registers oder einer Datenstruktur, in der der zugewiesene Thread erfasst wird; und
Übertragen über die Netzwerkschnittstelle des zugeteilten Threads an eine sichere Verarbeitungsumgebung der Vielzahl von verfügbaren Mitgliedsvorrichtungen und eines Steuerparameters für den Thread, wobei die sichere Verarbeitungsumgebung eine Schicht einer virtuellen Maschine umfasst, die dazu betrieben wird, Verarbeitungsressourcen der einen oder der mehreren Mitgliedsvorrichtungen zu trennen, um einen sicheren Container bereitzustellen, der Daten, Speicher und Verarbeitungsressourcen trennt, um eine gesicherte Verarbeitungsausführung durchzuführen.

16. Mitgliedsvorrichtung zur sicheren verteilten netzwerkübergreifenden Verarbeitung von heterogenen Verarbeitungsknoten, umfassend:
eine Netzwerkschnittstelle;
einen Prozessor; und
einen Speicher, der Anweisungen enthält, die, wenn sie vom Prozessor ausgeführt werden, die Mitgliedsvorrichtung zu Folgendem veranlassen:
Empfangen über die Netzwerkschnittstelle eines Threads eines Auftragsbündels von einer Befehlszentrale, wobei das Auftragsbündel eine Anforderung zum Sammeln von Daten und zum Verarbeiten gemäß Auftragsparametern ist, wobei die zu verarbeitenden gesammelten Daten unstrukturiert sind und nur die Auftragsparameter, die die an den Daten durchzuführende Verarbeitung definieren, den von der Befehlszentrale erwarteten Formaten entsprechen, wobei der Thread individuell abbrechbar ist und zur probabilistischen Ausführung idempotenter Verfahren zugewiesen wird, wobei nur Threads, die für die probabilistische Ausführung zugewiesen sind, individuell abbrechbar sind und als Reaktion auf ein Signal von der Befehlszentrale abgebrochen werden, dass der Thread an einem anderen Knoten erfolgreich ausgeführt wurde;
Empfangen eines Steuerparameters für den Thread von der Befehlszentrale über die Netzwerkschnittstelle,
Verarbeiten des Threads basierend auf dem Steuerparameter in einer sicheren Verarbeitungsumgebung der Mitgliedsvorrichtung, wobei die sichere Verarbeitungsumgebung eine Schicht einer virtuellen Maschine umfasst, die dazu betrieben wird, Verarbeitungsressourcen der Mitgliedsvorrichtung zu trennen, um einen sicheren Container bereitzustellen, der Daten, Speicher und Verarbeitungsressourcen trennt, um eine gesicherte Verarbeitungsausführung durchzuführen.

## Revendications

1. Procédé de traitement distribué sécurisé sur des réseaux de nœuds de traitement hétérogènes comprenant des dispositifs membres, le procédé comprenant :
la réception (505), au niveau d'un centre de commande comprenant un processeur, une interface réseau et une mémoire, d'un lot de tâches en tant que demande de collecte de données et de traitement soumis à des paramètres de tâche, dans lequel les données à traiter sont non structurées et seuls les paramètres de tâche définissant le traitement à effectuer sur les données sont conformes aux formats attendus par le centre de commande ;
la détermination (510) d'une valeur d'une dimension du lot de tâches, dans lequel la dimension du lot de tâches comprend au moins l'un parmi une utilisation de mémoire, une fréquence d'horloge d'un processeur, le fait que des fils d'exécution du lot de tâches doivent ou non être traités en parallèle, des contraintes de partage de charge entre des dispositifs membres disponibles, la présence d'un processeur à virgule flottante, un capteur requis, une échéance pour le lot de tâches, un paramètre de gestion des interruptions de traitement, la disponibilité d'une génération de nombres véritablement aléatoires et un paramètre associé à une capacité de mise en réseau des dispositifs membres ;
la détermination (515), sur la base de règles prédéterminées appliquées à la valeur déterminée de la dimension du lot de tâches, d'un coût de traitement agrégé pour le lot de tâches, dans lequel les règles optimisent une ou plusieurs métriques de performance de traitement ;
l'identification (520) d'un ou plusieurs dispositifs membres disponibles connectés en communication au centre de commande par l'intermédiaire de l'interface réseau ;
la division (525) du lot de tâches en fils d'exécution sur la base du coût de traitement agrégé ou des un ou plusieurs dispositifs membres disponibles, dans lequel les fils d'exécution sont exprimés dans le lot de tâches par référence à des méthodes idempotentes, dans lequel les fils d'exécution sont affectés en vue d'une exécution probabiliste et sont répartis entre plusieurs nœuds de traitement en vue d'une exécution probabiliste concurrente, dans lequel
seuls les fils d'exécution affectés en vue d'une exécution probabiliste sont annulables individuellement et sont annulés en réponse à un signal provenant du centre de commande indiquant que le fil d'exécution a été exécuté avec succès au niveau d'un autre nœud ou en réponse à une condition au niveau d'un nœud de traitement ;
la répartition (530) d'un fil d'exécution du lot de tâches entre un ou plusieurs dispositifs membres disponibles, dans lequel la répartition du fil d'exécution comprend : l'affectation du fil d'exécution au dispositif membre, et la création ou la mise à jour d'un registre ou d'une structure de données enregistrant le fil d'exécution affecté ; et
la transmission (535), par l'intermédiaire de l'interface réseau, du fil d'exécution réparti à un environnement de traitement sécurisé des un ou plusieurs dispositifs membres, ainsi que d'un paramètre de commande pour le fil d'exécution, dans lequel l'environnement de traitement sécurisé comprend une couche de machine virtuelle qui fonctionne de manière à séparer les ressources de traitement des un ou plusieurs dispositifs membres afin de fournir un conteneur sécurisé séparant les données, la mémoire et les ressources de traitement destinées à l'exécution d'un traitement sécurisé.

2. Procédé selon la revendication 1, dans lequel le fil d'exécution réparti est transmis par l'intermédiaire d'un canal de commande entre le centre de commande et le dispositif membre.

3. Procédé selon la revendication 1, dans lequel les fils d'exécution sont répartis de manière à être exécutés en parallèle.

4. Procédé selon la revendication 1, comprenant en outre :
la réception, au niveau du centre de commande, par l'intermédiaire de l'interface réseau, d'un fil d'exécution réparti achevé en provenance du dispositif membre.

5. Procédé de traitement distribué sécurisé sur des réseaux de nœuds de traitement hétérogènes, le procédé comprenant :
la réception, par l'intermédiaire d'une interface réseau, au niveau d'un dispositif membre comprenant un processeur et une mémoire, d'un fil d'exécution d'un lot de tâches en provenance d'un centre de commande, dans lequel le lot de tâches est une demande de collecte de données et de traitement soumis à des paramètres de tâche, dans lequel les données collectées à traiter sont non structurées et seuls les paramètres de tâche définissant le traitement à effectuer sur les données sont conformes aux formats attendus par le centre de commande ;
la réception, en provenance du centre de commande, par l'intermédiaire de l'interface réseau, d'un paramètre de commande pour le fil d'exécution ;
le traitement du fil d'exécution sur la base du paramètre de commande dans un environnement de traitement sécurisé du dispositif membre, dans lequel le fil d'exécution est réparti entre plusieurs nœuds de traitement en vue d'une exécution probabiliste concurrente, dans lequel le fil d'exécution est annulable individuellement et est affecté en vue d'une exécution probabiliste par référence à des méthodes idempotentes, dans lequel seuls les fils d'exécution affectés en vue d'une exécution probabiliste sont annulables individuellement et annulés en réponse à un signal provenant du centre de commande indiquant que le fil d'exécution a été exécuté avec succès au niveau d'un autre nœud, dans lequel le paramètre de commande spécifie au moins l'un parmi une échéance pour l'achèvement du fil d'exécution, des instructions de défaillance/d'interruption pour le traitement du fil d'exécution et des instructions de chiffrement/déchiffrement pour la transmission du fil d'exécution au centre de commande une fois celui-ci achevé, dans lequel l'environnement de traitement sécurisé comprend une couche de machine virtuelle qui fonctionne de manière à séparer les ressources de traitement du dispositif membre afin de fournir un conteneur sécurisé séparant les données, la mémoire et les ressources de traitement destinées à l'exécution d'un traitement sécurisé.

6. Procédé selon la revendication 5, dans lequel l'environnement de traitement sécurisé est fourni par un cadre logiciel fonctionnant sur une machine virtuelle Java mise en œuvre sur le dispositif membre.

7. Procédé selon la revendication 5, comprenant en outre :
la réception, par l'intermédiaire de l'interface réseau, d'un second fil d'exécution en provenance du centre de commande ;
la réception, en provenance du centre de commande, par l'intermédiaire de l'interface réseau, d'un paramètre de commande pour le second fil d'exécution ; et
le traitement du fil d'exécution sur la base du paramètre de commande pour le second fil d'exécution dans un second environnement de traitement sécurisé du dispositif membre,
dans lequel les processus et la mémoire du dispositif membre associés à l'environnement de traitement sécurisé sont isolés des processus et de la mémoire associés au second environnement de traitement sécurisé.

8. Procédé selon la revendication 5, dans lequel les processus et la mémoire associés à l'environnement de traitement sécurisé du dispositif membre sont isolés des processus et de la mémoire associés à une application s'exécutant sur le dispositif membre.

9. Procédé selon la revendication 6, dans lequel le cadre logiciel sur le dispositif membre est connecté en communication à un cadre logiciel sur un second dispositif membre.

10. Procédé selon la revendication 5, dans lequel le paramètre de commande est associé à au moins l'un parmi un calendrier de traitement du fil d'exécution, un protocole d'interruption pour le fil d'exécution et un protocole de défaillance pour le fil d'exécution.

11. Support non transitoire lisible par ordinateur contenant un code de programme destiné à un traitement distribué sécurisé sur des réseaux de nœuds de traitement hétérogènes comprenant des dispositifs membres, lequel code, lorsqu'il est exécuté par un processeur, amène un centre de commande à :
recevoir, au niveau du centre de commande, un lot de tâches en tant que demande de collecte de données et de traitement soumis à des paramètres de tâche, le centre de commande comprenant le processeur, une interface réseau et une mémoire, dans lequel les données à traiter sont non structurées et seuls les paramètres de tâche définissant le traitement à effectuer sur les données sont conformes aux formats attendus par le centre de commande ;
déterminer une valeur d'une dimension du lot de tâches, dans lequel la dimension du lot de tâches comprend au moins l'un parmi une utilisation de mémoire, une fréquence d'horloge d'un processeur, le fait que des fils d'exécution du lot de tâches doivent ou non être traités en parallèle, des contraintes de partage de charge entre des dispositifs membres disponibles, la présence d'un processeur à virgule flottante, un capteur requis, une échéance pour la demande, un paramètre de gestion des interruptions de traitement correspondant à chaque fil d'exécution parmi les fils d'exécution répartis, la disponibilité d'une génération de nombres véritablement aléatoires et un paramètre associé à une capacité de mise en réseau ;
déterminer, sur la base de règles prédéterminées appliquées à la valeur déterminée de la dimension du lot de tâches, un coût de traitement informatique pour le lot de tâches, dans lequel les règles optimisent une ou plusieurs métriques de performance de traitement ;
identifier une pluralité de dispositifs membres disponibles connectés en communication au centre de commande par l'intermédiaire de l'interface réseau ;
diviser le lot de tâches en fils d'exécution sur la base du coût de traitement informatique ou des un ou plusieurs dispositifs membres disponibles, dans lequel seuls les fils d'exécution affectés en vue d'une exécution probabiliste sont annulables individuellement et sont annulés en réponse à un signal provenant du centre de commande indiquant que le fil d'exécution a été exécuté avec succès au niveau d'un autre nœud, dans lequel les fils d'exécution sont affectés en vue d'une exécution probabiliste par référence à des méthodes idempotentes et sont répartis entre plusieurs nœuds de traitement en vue d'une exécution probabiliste concurrente ;
répartir un fil d'exécution du lot de tâches entre un ou plusieurs dispositifs membres disponibles, dans lequel la répartition du fil d'exécution comprend : l'affectation du fil d'exécution au dispositif membre, et la création ou la mise à jour d'un registre ou d'une structure de données enregistrant le fil d'exécution affecté ; et
transmettre, par l'intermédiaire de l'interface réseau, le fil d'exécution réparti à un environnement de traitement sécurisé des un ou plusieurs dispositifs membres disponibles, ainsi qu'un paramètre de commande pour le fil d'exécution, dans lequel l'environnement de traitement sécurisé comprend une couche de machine virtuelle qui fonctionne de manière à séparer les ressources de traitement des un ou plusieurs dispositifs membres afin de fournir un conteneur sécurisé séparant les données, la mémoire et les ressources de traitement destinées à l'exécution d'un traitement sécurisé.

12. Support non transitoire lisible par ordinateur selon la revendication 11, dans lequel le fil d'exécution réparti est transmis par l'intermédiaire d'un canal de commande entre le centre de commande et le dispositif membre.

13. Support non transitoire lisible par ordinateur selon la revendication 11, dans lequel les fils d'exécution sont répartis de manière à être exécutés en parallèle.

14. Support non transitoire lisible par ordinateur selon la revendication 11, comprenant un code de programme qui, lorsqu'il est exécuté par le processeur, amène le centre de commande à :
recevoir, par l'intermédiaire de l'interface réseau, un fil d'exécution réparti achevé en provenance du dispositif membre.

15. Centre de commande destiné à un traitement distribué sécurisé sur des réseaux de nœuds de traitement hétérogènes comprenant des dispositifs membres, le centre de commande comprenant :
un processeur ;
une interface réseau ; et
une mémoire contenant des instructions qui, lorsqu'elles sont exécutées par le processeur, amènent le centre de commande à :
recevoir un lot de tâches en tant que demande de collecte de données et de traitement soumis à des paramètres de tâche, dans lequel les données à traiter sont non structurées et seuls les paramètres de tâche définissant le traitement à effectuer sur les données sont conformes aux formats attendus par le centre de commande ;
déterminer une valeur d'une dimension du lot de tâches, dans lequel la dimension du lot de tâches comprend au moins l'un parmi une utilisation de mémoire, une fréquence d'horloge d'un processeur, le fait que des fils d'exécution du lot de tâches doivent ou non être traités en parallèle, des contraintes de partage de charge entre des dispositifs membres disponibles, la présence d'un processeur à virgule flottante, un capteur requis, une échéance pour le lot de tâches, un paramètre de gestion des interruptions de traitement correspondant à chaque fil d'exécution parmi les fils d'exécution répartis, la disponibilité d'une génération de nombres véritablement aléatoires et un paramètre associé à une capacité de mise en réseau ;
déterminer, sur la base de règles prédéterminées appliquées à la valeur déterminée de la dimension du lot de tâches, un coût de traitement informatique pour le lot de tâches, dans lequel les règles optimisent une ou plusieurs métriques de performance de traitement ;
identifier une pluralité de dispositifs membres disponibles connectés en communication au centre de commande par l'intermédiaire de l'interface réseau ;
diviser le lot de tâches en une pluralité de fils d'exécution sur la base du coût de traitement informatique ou des dispositifs membres disponibles, dans lequel au moins plusieurs fils d'exécution de la pluralité de fils d'exécution sont annulables individuellement et dans lequel les fils d'exécution qui sont exprimés dans le lot de tâches par référence à des méthodes idempotraphiques sont affectés en vue de l'exécution probabiliste d'une méthode idempotente, dans lequel seuls les fils d'exécution affectés en vue d'une exécution probabiliste sont annulables individuellement et sont annulés en réponse à un signal provenant du centre de commande indiquant que le fil d'exécution a été exécuté avec succès au niveau d'un autre nœud ;
répartir une pluralité de fils d'exécution du lot de tâches entre une pluralité de dispositifs membres, dans lequel la répartition du fil d'exécution comprend : l'affectation du fil d'exécution au dispositif membre, et la création ou la mise à jour d'un registre ou d'une structure de données enregistrant le fil d'exécution affecté ; et
transmettre, par l'intermédiaire de l'interface réseau, le fil d'exécution réparti à un environnement de traitement sécurisé de la pluralité de dispositifs membres disponibles, ainsi qu'un paramètre de commande pour le fil d'exécution, dans lequel l'environnement de traitement sécurisé comprend une couche de machine virtuelle qui fonctionne de manière à séparer les ressources de traitement des un ou plusieurs dispositifs membres afin de fournir un conteneur sécurisé séparant les données, la mémoire et les ressources de traitement destinées à l'exécution d'un traitement sécurisé.

16. Dispositif membre destiné à un traitement distribué sécurisé sur des réseaux de nœuds de traitement hétérogènes, comprenant :
une interface réseau ;
un processeur ; et
une mémoire contenant des instructions qui, lorsqu'elles sont exécutées par le processeur, amènent le dispositif membre à :
recevoir, par l'intermédiaire de l'interface réseau, un fil d'exécution d'un lot de tâches en provenance d'un centre de commande, dans lequel le lot de tâches est une demande de collecte de données et de traitement soumis à des paramètres de tâche, dans lequel les données collectées à traiter sont non structurées et seuls les paramètres de tâche définissant le traitement à effectuer sur les données sont conformes aux formats attendus par le centre de commande, dans lequel le fil d'exécution est annulable individuellement et est affecté en vue de l'exécution probabiliste de méthodes idempotentes, dans lequel seuls les fils d'exécution affectés en vue d'une exécution probabiliste sont annulables individuellement et sont annulés en réponse à un signal provenant du centre de commande indiquant que le fil d'exécution a été exécuté avec succès au niveau d'un autre nœud ;
recevoir, en provenance du centre de commande, par l'intermédiaire de l'interface réseau, un paramètre de commande pour le fil d'exécution ;
traiter le fil d'exécution sur la base du paramètre de commande dans un environnement de traitement sécurisé du dispositif membre, dans lequel l'environnement de traitement sécurisé comprend une couche de machine virtuelle fonctionnant de manière à séparer les ressources de traitement du dispositif membre afin de fournir un conteneur sécurisé séparant les données, la mémoire et les ressources de traitement destinées à l'exécution d'un traitement sécurisé.
